# EUROPEAN PATENT APPLICATION

(11) **EP 3 862 613 A1**
(43) Date of publication of application: **11.08.2021**
(21) Application number: 20382088.1
(22) Date of filing: 10.02.2020
(51) Int. Cl.: F16M 11/00, A47B 21/007

(54) **A CONCEALABLE APPARATUS ASSEMBLY**

(71) Applicant: Albiral Display Solutions, S.L., 08512 Sant Hipòlit De Voltregà (ES)
(72) Inventor: HOLM JENSEN, Henrik Bo Aage, 08512 SANT HIPÒLIT DE VOLTREGÀ (ES); PRESAS SÁNCHEZ, Xavier, 08512 SANT HIPÒLIT DE VOLTREGÀ (ES); MUNTANÉ PERNADÓ, Francesc, 08512 SANT HIPÒLIT DE VOLTREGÀ (ES)
(74) Representative: Ponti & Partners, S.L.P

(57) **Abstract**

The present invention relates to a concealable apparatus assembly, comprising:
- a support structure (H) to be arranged under a hidden face of a board (1), or panel, adjacent to the contour of a through opening (O1); and
- two or more apparatus (2a, 2b, 2c, 2d) and a mobile support structure (S) arranged to the support structure (H) to move linearly between a concealed position and a first use position; and
- one or more mobile members (G1, G2) to move the apparatuses (2a, 2b, 2c, 2d) with respect to the mobile support structure (S), to displace the same from the first use position, to a second use position at which the apparatuses (2a, 2b, 2c, 2d) also protrude above the board (1), or panel, but with orientations which are different to each other and also different to the orientations they adopt in the first use position.

## Description

### FIELD OF THE INVENTION

The present invention generally relates, to a concealable apparatus assembly capable of providing a concealing and a revealing or use position for an apparatus with respect to the opening of a board or plate, and more specifically to an assembly simultaneously providing further use positions for two or more apparatuses.

### BACKGROUND OF THE INVENTION

Concealable apparatus assemblies comprising the features of the preamble of claim 1 are known in the art, i.e. the following features:
- a support structure configured to be arranged under a hidden face of a board, or panel, in a region adjacent to the contour of a through opening thereof; and
- at least one apparatus and a mobile support structure supporting the at least one apparatus, wherein the mobile support structure is fixed in a guided manner to the support structure to move linearly, together with the at least one apparatus, between a concealed position at which when the support structure is arranged under the hidden face of the board, or panel, the at least one apparatus does not protrude through the through opening, and a use position at which the at least one apparatus protrudes above the board, or panel, through the through opening, and vice versa.

Some of said known concealable apparatus assemblies are disclosed in International application WO2018078205 and in Spanish utility model ES1158985U.

Those already known apparatus assemblies have some shortcomings, such as those of providing only a use position, when the apparatus is revealed, for a user. For some applications that use position is not appropriate.

Indeed, depending on the table shape/dimensions, and/or of the number of users and particularly the places those users are located around the table on which the apparatus assembly is mounted, the use position provided by the prior art concealable apparatus assemblies is not appropriate.

Also, those already known prior art apparatus assemblies are not intended for providing several apparatuses for several users which occupy different positions around the table, i.e. with different needs regarding apparatus use positions.

It is, therefore, necessary to provide an alternative to the state of the art which covers the gaps found therein, by providing a concealable apparatus assembly which overcomes the above mentioned shortcomings, and hence provides appropriate use positions for several apparatuses for a plurality of users occupying different positions around, for example, a table, and even capable of modifying the provided use positions if the users change their positions around the table.

### SUMMARY OF THE INVENTION

To that end, the present invention relates to a concealable apparatus assembly, comprising:
- a support structure configured to be arranged under (at least most of the structure) a hidden face of a board, or panel, in a region adjacent to the contour of a through opening thereof; and
- at least one apparatus and a mobile support structure supporting the at least one apparatus, wherein the mobile support structure is fixed in a guided manner to the support structure to move (at least) linearly, together with the at least one apparatus, between a concealed position at which when the support structure is arranged under the hidden face of the board, or panel, the at least one apparatus does not protrude through the through opening, and a use position at which the at least one apparatus protrudes above the board, or panel, through the through opening, and vice versa.

In contrast to the concealable apparatus assemblies known in the prior art, in the one of the present invention, in a characterizing manner,
- the at least one apparatus are at least two apparatuses; and
- the assembly further comprises at least one mobile member attached to the at least two apparatuses, wherein the at least one mobile member is configured to move with respect to the mobile support structure, to displace the at least two apparatuses from the above mentioned use position, which is a first use position, to a second use position at which the at least two apparatuses also protrude above the board, or panel, but with orientations which are different to each other and also different to the orientations they adopt in the first use position.

Regarding the arrangement of the support structure under a hidden face of a board, or panel, any manner to carry out the same known by the skilled person is embraced for different embodiments of the present invention, such as by fixing or coupling the same to that hidden face, and/or by embedding un upper part of the same within the board, or panel, and/or by supporting the support structure on the floor under the table, or panel, by means of appropriate legs.

For a preferred embodiment, the at least one mobile member is configured to move with respect to the mobile support structure, to displace the at least two apparatuses from the first use position to the second use position simultaneously.

For some implementations of that preferred embodiment, that simultaneity is achieved mechanically, by means of the at least one mobile member simultaneously moving both of the at least two apparatuses, directly, where the at least one mobile member acts on both of the at least two apparatuses, or indirectly, where the at least one mobile member acts on a first of the at least two apparatuses, and a second of the at least two apparatus being joined to the first apparatus is moved by the latter.

For other implementations of that preferred embodiment, that simultaneity is achieved electronically, by means of a control system (which will be described below) independently controlling respective member driving means (also described below) kinematically linked to two mobile members to make them move to displace a first and a second of the at least two apparatuses simultaneously. I.e. the control system accurately synchronized the control of both member driving means so that they act simultaneously.

For an alternative embodiment, the at least one mobile member is configured to move with respect to the mobile support structure, to displace the at least two apparatuses from the first use position to the second use position sequentially.

In order to implement that embodiment the assembly comprises at least two of the above mentioned mobile members, each configured to displace a respective of the at least two apparatuses from the first use position to the second use position, and each also being kinematically linked to a respective member driving means independently controlled by a control system of the assembly.

For that implementation, the control system preferably controls in a synchronized manner both member driving means so that they act sequentially, for example one immediately after the other. However, for other implementations, the control of the member driving means is not synchronized, but completely independent from each other.

For an embodiment, the assembly of the present invention further comprises a rotating support structure supporting the at least two apparatuses and the at least one mobile member, wherein the rotating support structure is rotatably fixed to the mobile support structure to rotate about a rotating axis, to displace the at least two apparatuses, from the second use position to a third use position at which the at least two apparatuses also protrude above the board, or panel, but with orientations which are different to each other, and also different to the orientations they adopt in the first and in the second use positions.

Preferably, the rotating axis runs parallel to a direction along which the support structure is displaced from the concealed position to the first use position, although alternative directions for the rotating axis are also envisaged for less preferred embodiments.

According to an embodiment, the at least one mobile member is fixed in a guided manner to the rotating support structure to move linearly according to a linear direction, which is orthogonal to a direction along which the support structure is displaced from the concealed position to the first use position.

For some embodiments, the apparatuses are microphones, speakers, data or electrical sockets, and /or data or electrical cables.

For a preferred embodiment, the at least two apparatuses comprise at least a first and a second screens, and the above mentioned through opening is elongated so that the first and a second screens can pass therethrough.

According to an implementation of that embodiment, the first and second screens are hinged to each other at respective first side edges, and a second side edge of at least one of the first and second screens is pivotally attached to the at least one mobile member, so that when the at least one mobile member moves linearly it pulls, by its second side edge, the at least one of the first and second screens which is pivotally attached thereto, while the second side edge also pivots about a pivot axis orthogonal to the above mentioned linear direction, which makes both of the at least first and second screens pivot about their hinged first ends.

For a variant of that implementation, the at least one mobile member is only one mobile member, so that the second side edge of the screen, first or second, which is not attached to any mobile member is pivotally attached to a point of the rotating support structure located in the path followed by the mobile member when linearly moving, so that when the mobile member moves linearly approaching that point that second side edge of the screen, first or second, which is not attached to any mobile member also pivots about a pivot axis running through said point orthogonally to the above mentioned linear direction, which makes both of the at least first and second screens pivot about their hinged first ends.

However, for a preferred variant of that implementation, the at least one mobile member are two mobile members configured to simultaneously move lineally along the above mentioned linear direction, in an approaching/distancing displacement, wherein a second side edge of the first screen is pivotally attached to one of the two mobile members, and a second side edge of the second screen is pivotally attached to the other of the two mobile members, so that when the two mobile members move linearly according to an approaching displacement, where they approach to each other, each pulls a respective one of the first and second screens by its corresponding second side edge, while each second side edge also pivots about a respective pivot axis orthogonal to the above mentioned linear direction, which makes both of the first and second screens pivot about their hinged first ends.

For a preferred embodiment, the at least two apparatuses further comprise a third and a fourth screens.

According to an implementation of that preferred embodiment, the third and fourth screens are hinged to each other at respective first side edges, and second side edges of the third and fourth screens are respectively hinged to those second side edges of the first and second screens.

For a variant of that implementation of the preferred embodiment, at the concealed and first use positions:
- the first and second screens are pivoted about their hinged first side edges so that upper edges thereof are tilted with respect to each other according to a first angle, making the hinged first side edges protrude in a first protruding direction with respect to a plane including the above mentioned pivot axes; and
- the third and fourth screens are pivoted about their hinged first side edges so that upper edges thereof are tilted with respect to each other also according to said first angle, making those hinged first side edges protrude in a second protruding direction, opposite to the first protruding direction, with respect to that plane including those pivot axes.

According to said variant, at the second use position:
- the first and second screens are pivoted about their hinged first side edges, so that upper edges thereof are tilted with respect to each other according to a second angle greater than the first angle, making their hinged first side edges also protrude in the above mentioned first protruding direction with respect to the plane including the pivot axes; and
- the third and fourth screens are pivoted about their hinged first side edges so that upper edges thereof are tilted with respect to each other also according to said second angle α₂, making their hinged first side edges also protrude in the second protruding direction with respect to the plane including the pivot axes.

In other words, for the second use position, the screens form, from a plan view, a rhombus.

According to an embodiment, the above mentioned second angle is of 90°, and the assembly further comprises rotation driving means kinematically linked to the rotating support structure to rotate the same about the above mentioned rotating axis, so that when at the third use position the rotating support structure and the first, second, third, and fourth screens are rotated as a whole 45° about the above mentioned rotating axis with respect to their position at the second use position, but maintaining the screens with their upper edges tilted as in the second use position.

Therefore, for a preferred embodiment for which the first, second, third and fourth screens have the same dimensions, when at the second position, for a plan view, the screens form a rhombus with four respective square angles, and at the third use position that rhombus is 45 ° rotated so that it becomes a rectangle, particularly a square.

According to an embodiment, the assembly of the present invention comprises member driving means kinematically linked to the two mobile members to make them move to displace the first, second, third, and fourth screens between the first and second use positions, wherein those member driving means are configured and arranged to immobilize the first, second, third, and fourth screens at the first and second use positions, and also at a plurality of intermediate use positions at which the upper edges of the first and second screens are tilted with respect to each other according to respective intermediate angles greater than the first angle but less than the second angle, and the upper edges of the third and fourth screens are also tilted with respect to each other according to those respective intermediate angles.

The first, second, third, and all the intermediate use positions are revealing positions, i.e. positions at which the apparatuses protrude above the board, or panel, through the through opening, and are thus revealed.

For other embodiments, there are a plurality of selectable second use positions, including a limit second use position, associated to a maximum possible displacement, and further non-limit second use positions (corresponding to the above called intermediate use positions). For these embodiments, the assembly is configured (for example, automatically by programming a control system thereof, or manually by a user acting on a corresponding interface or input device, such as a push-button) to set as second use position any of those limit or non-limit second use positions.

Similarly, for some embodiments, there are a plurality of selectable third use positions, including a limit third use position, associated to a maximum possible displacement, and further non-limit third use positions, not associated to that maximum possible displacement. For these embodiments, the assembly is configured (for example, automatically by programming a control system thereof, or manually by a user acting on a corresponding interface or input device, such as a push-button) to set as third use position any of those limit or non-limit third use positions.

For an embodiment, the assembly of the present invention further comprises a cover for covering the through opening of the board or panel, the cover comprising and least a cover plate with a first edge hinged to a contour edge of the through opening, and cover driving means kinematically linked to a second edge, or region adjacent thereto, of that cover plate, opposite to the first edge, to rotate the cover plate about its hinged first edge towards the supporting structure through the through opening.

For a variant of that embodiment, the cover comprises two cover plates, each defined according to the above description and kinematically linked to respective cover driving means, wherein the two cover plates are butt arranged by their respective second edges and hinged by their respective first edges to a respective of two opposed contour edges of the through opening, so that both cover plates rotate about their respective hinged first edge towards the supporting structure through the through opening to uncover the through opening, and do otherwise, i.e. rotate upwards to cover the through opening.

According to an embodiment, the assembly of the present invention further comprises a control system configured and arranged to automatically control one or more (preferably all of them) of the rotation driving means, member driving means, and cover driving means.

The control system is also configured and arranged to control structure driving means comprised by the assembly of the present invention and which are kinematically linked to the mobile support structure, to make the same move as described above, i.e. linearly between the concealed position and the first use position.

The control system can operate according to different operation modes, by conveniently programing the same with different program operation modes.

For one of those operation modes, the control system, in response to an initial user command, performs the following three actions automatically:
- first controls the cover driving means, to uncover the through opening;
- then controls the structure driving means to lift the apparatuses up to their first use position, and
- then controls the member driving means to move them up to the second use position.

Then, the control system, only if receives a further specific user command, rotates all the apparatuses up to the third use position.

As state above, other operation modes are possible, such as substituting the displacement to the second use position by a displacement to an intermediate position (which could be selected by a user from a pool of available intermediate positions provided through an interface by the control system), or performing also the rotation to the third position automatically after the above indicated three action, when the control system receives an initial user command, or adjusting the orientation of the apparatuses to a desired one (intermediate between the first and second use positions, or between the second and third use positions), by a user acting on an input device, such as a push button.

Different use input devices can be provided to allow the user to provide the control system with the desired use commands, such as push buttons, remote controllers, etc. on the assembly itself (for example one an upper face of mobile support structure) or at a remote location.

Moreover, further and different kind of apparatuses (microphones, speakers, data or electrical sockets, data or electrical cables, etc.) are also arranged on the mobile support structure to be revealed for any or all of the above mentioned use positions.

### BRIEF DESCRIPTION OF THE FIGURES

In the following some preferred embodiments of the invention will be described with reference to the enclosed figures. They are provided only for illustration purposes without however limiting the scope of the invention.
Figures 1a and 1b show an elevation view and a plan view, respectively, of the assembly of the present invention for an embodiment for which the assembly comprises four screens, which are shown in a concealed position.
Figures 2a and 2b show the same embodiment as Figures 1a-b, by means of a perspective view and a plan view, respectively, but for a position of the screens at which they are partially elevated towards their first or revealed use position.
Figures 3a, 3b and 3c show the same embodiment as Figures 2a-b, by means of a perspective view, an elevation view and a plan view, respectively, but for a position of the screens at which they are completely elevated, i.e. at their first use position.
Figures 4a, 4b, 4c and 4d show the same embodiment as Figures 3a-c, by means of a perspective view, two elevation views and a plan view, respectively, but for a position of the screens at which they have been displaced (expanded) until reaching their second use position.
Figures 5a, 5b, and 5c show the same embodiment as Figures 4a-d, by means of a perspective view, an elevation view and a plan view, respectively, but for a position of the screens at which they have been rotated until reaching their third use position.
Figure 6 is a perspective view showing, for the same embodiment of the above figures, the rotating support structure and mobile members of the assembly of the present invention.
Figure 7 is a perspective view showing, for the same embodiment of the above figures, the mobile support structure and driving means of the assembly of the present invention.
Figure 8 is a perspective view showing some of the components shown in Figure 7, particularly the member driving means to be kinematically linked to the two mobile members shown in Figure 6.
Figure 9 is a partial perspective view also showing some of the components shown in Figure 7, particularly the rotation driving means to be kinematically linked to the rotating support structure shown in Figure 6.
Figure 10 is a partial perspective view also showing some of the components shown in Figure 7, showing in detail the structure driving means to lift the screens up to their first use position, including a toothed vertical rack mounted within the support structure (the representation of the toothed vertical rack is schematic, the length of the toothed portion thereof is not realistic: it should be long enough to provide the linear displacement of the screens between the concealed position and the first, revealed, use position).
Figures 11a, 11b, 11c and 11d show different partial or complete perspective views of the cover driving means of the assembly of the present invention, for the same embodiments as the above figures.

### DESCRIPTION OF THE PREFERRED EMBODIMENTS

In the present section an embodiment of the concealable apparatus assembly of the present invention will be described with reference to the Figures.

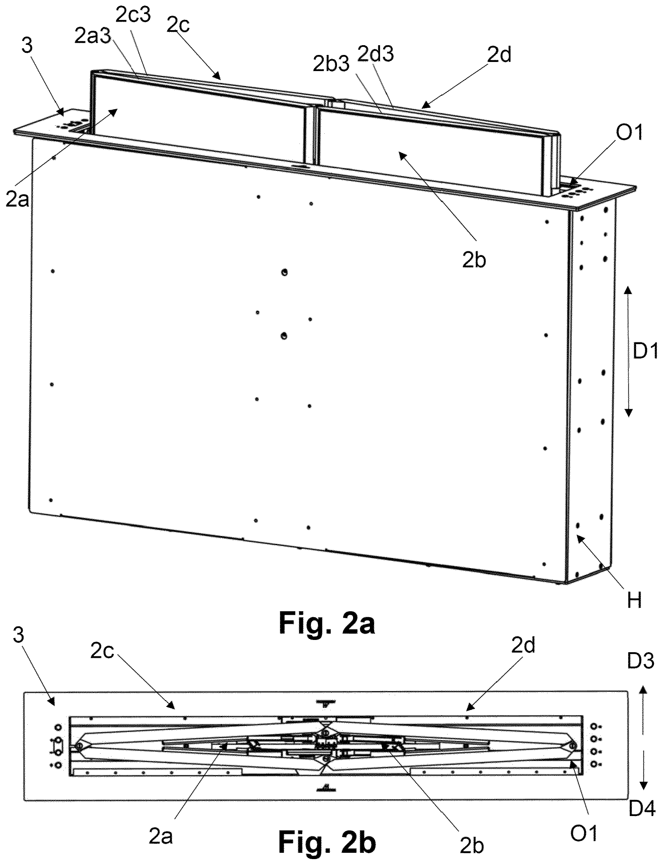

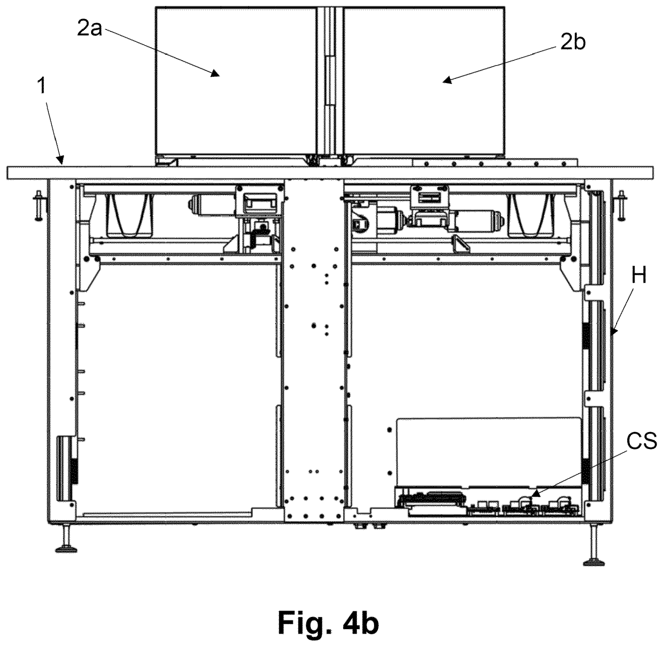

As shown in the Figures, the present invention relates to a concealable apparatus assembly, comprising:
- a support structure H configured to be arranged under a hidden face of a board 1 (see Figure 4b), or panel, in a region adjacent to the contour of an elongated through opening O1 thereof; and
- four screens 2a, 2b, 2c, 2d and a mobile support structure S supporting the same, wherein the mobile support structure S is fixed in a guided manner to the support structure H to move linearly, together with the screens 2a, 2b, 2c, 2d, according to direction D1 (in this case a vertical direction, as indicated in Figure 2a) between a concealed position at which when the support structure H is arranged under the hidden face of the board 1, or panel, the screens 2a, 2b, 2c, 2d do not protrude through the through opening O1, and a first use position at which the screen 2a, 2b, 2c, 2d protrudes above the board 1, or panel, through the through opening O1, and vice versa.

As shown in Figures 2a and 2b, the assembly comprises a frame plate 3 which surrounds through opening O1, which, when mounted on the board or panel, is preferably flush with an upper surface thereof. Frame plate 3 includes some push-buttons for allowing the user to control the operation of the assembly.

For the illustrated embodiment, the support structure H (see Figure 4b) comprise support legs, so that the support structure H is arranged under (for example, fixed to) the lower face of board 1 and also supported by those legs on the floor.

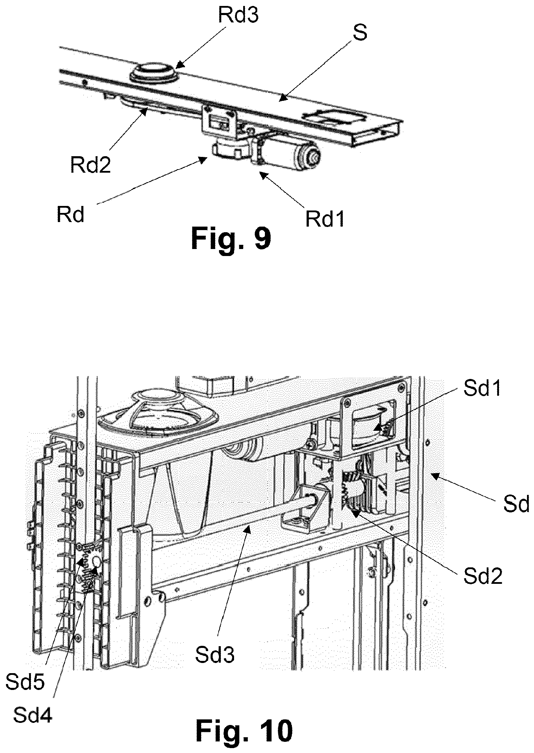

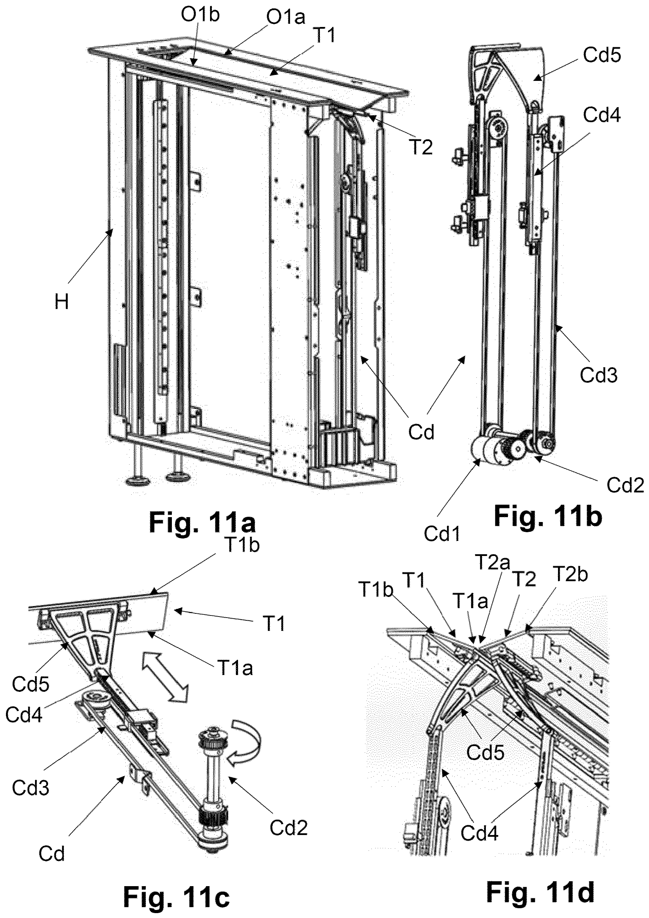

Figure 10 shows an embodiment of the structure driving means Sd included in the assembly (which for the illustrated embodiment defines a housing or frame supporting the structure driving means Sd), to move the support structure S linearly as indicate above. For that embodiment, the structure driving means Sd particularly comprise a gearmotor Sd1 kinematically linked to the mobile support structure S by means of conical gears Sd2, which transfer rotational movement to a shaft Sd3 with a toothed pinion Sd4 placed at both of its free ends (only one free end is shown in the Figure) which gears with a toothed vertical rack Sd5 attached to an inner wall of the support structure H (se Figure 11a), so that the support structure S is linearly moved upwards/downwards (depending on the rotation direction of the gearmotor Sd1).

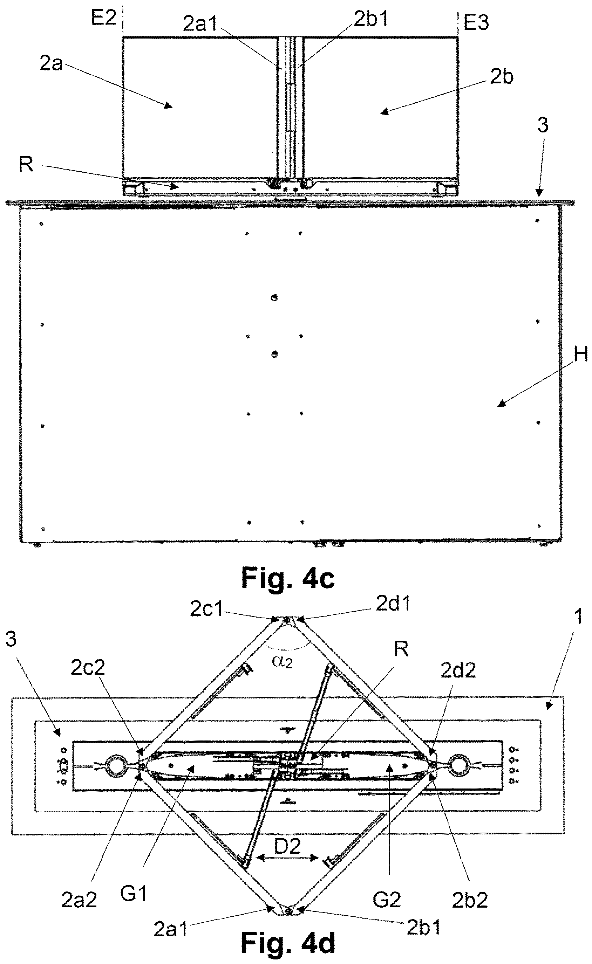

The four screens are identified herein as first 2a, second 2b, third 2c, and fourth 2d screens, wherein, as indicated in Figure 4d, the first 2a and second 2b screens are hinged to each other at respective first side edges 2a1, 2b1, and the third 2c and fourth 2d screens are also hinged to each other at respective first side edges 2c1, 2d1.

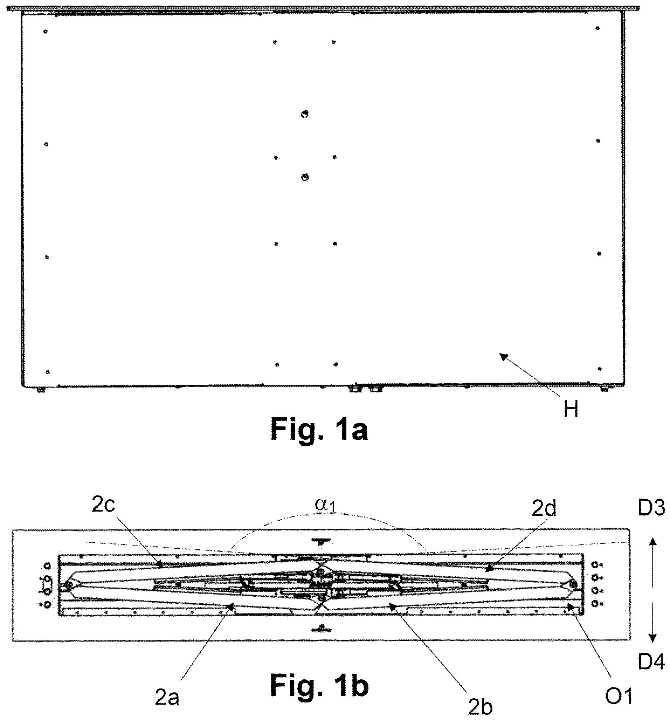

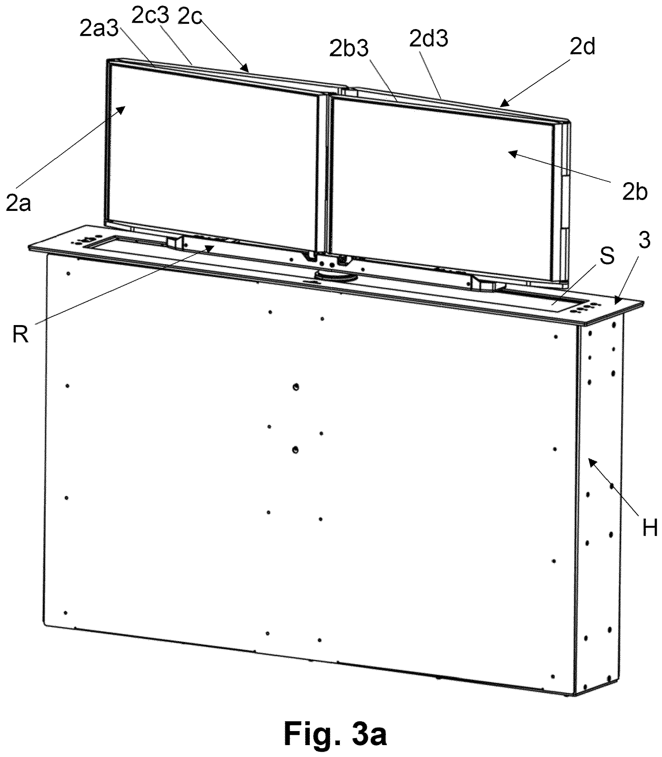

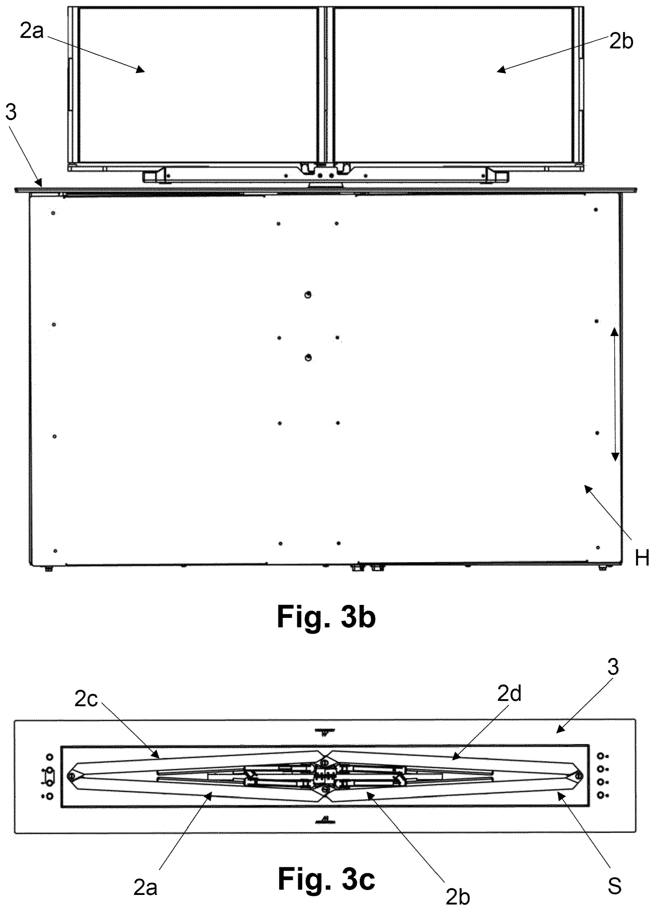

As shown in some of the Figures 1b, 2b, 3c, 4d, 5c, and 6, the assembly further comprises two mobile members G1, G2 mounted on the mobile support structure S to move therewith from the concealed position to the first use position, and vice versa.

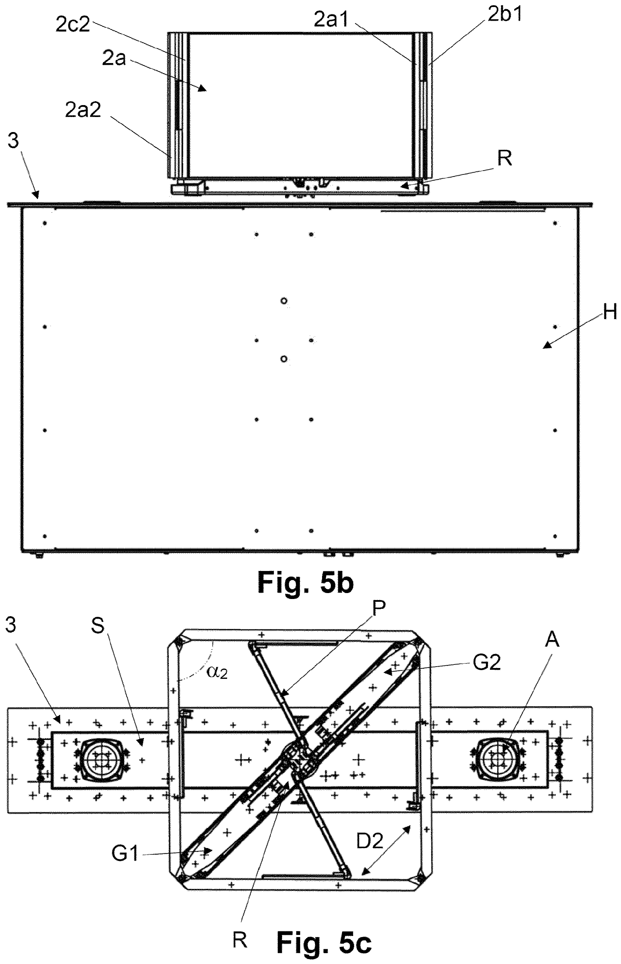

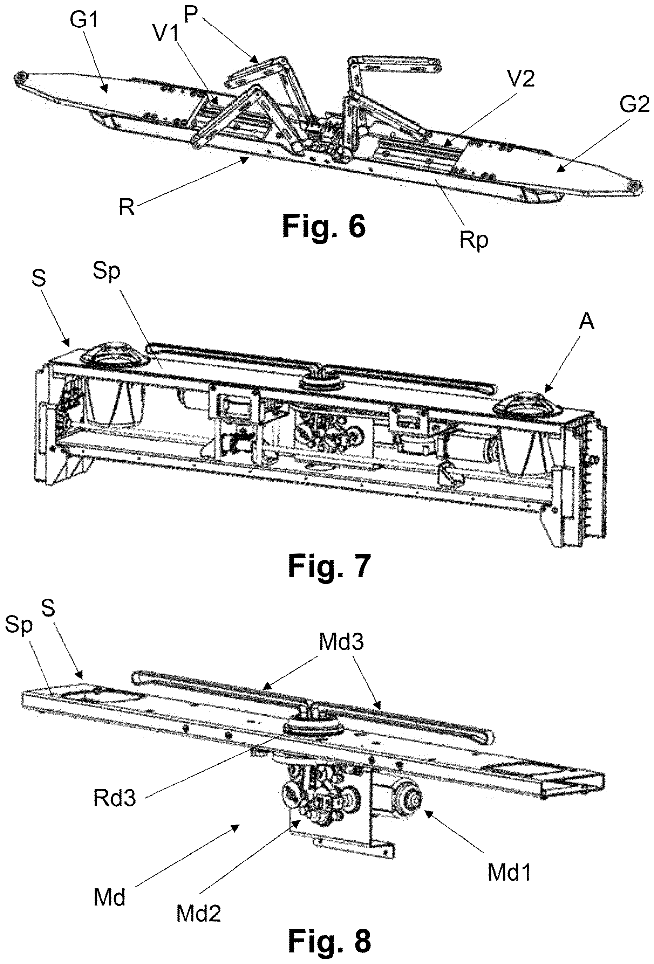

The two mobile members G1, G2 are configured to simultaneously move lineally along a linear direction D2 (see Figures 4d and 5c), in an approaching/distancing displacement, on the mobile support structure S, in this case through corresponding rails V1, V2 attached to an upper plate Rp of a rotating support structure R, as shown in Figure 6. Direction D2 is, for the illustrated embodiment, orthogonal to direction D1.

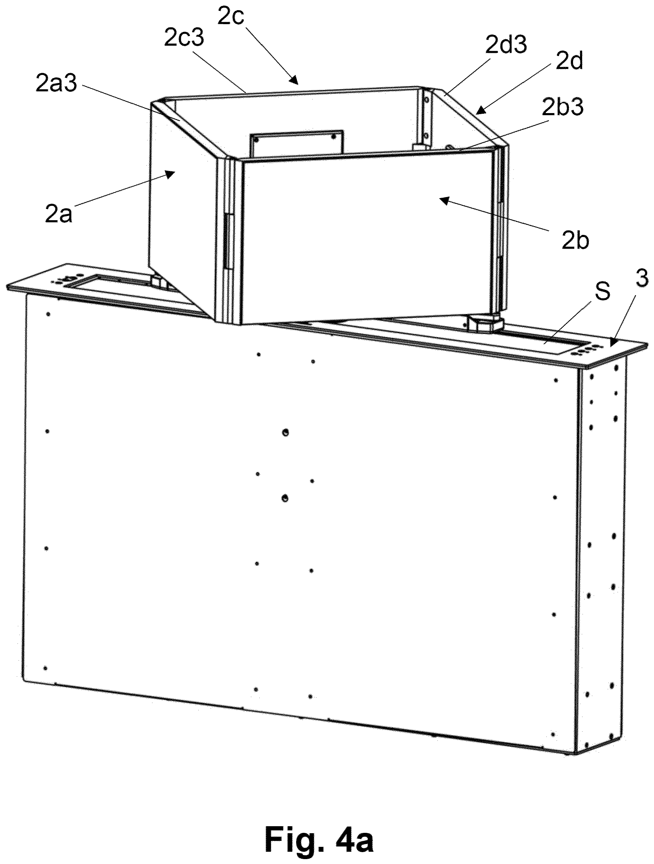

As indicated in Figure 4d, a second side edge 2a2 of the first screen 2a is pivotally attached to mobile member G1, a second side edge 2b2 of the second screen 2b is pivotally attached to the mobile member G2. Second side edges 2c2, 2d2 of the third 2c and fourth 2d screens are respectively hinged to said second side edges 2a2, 2b2 of the first 2a and second 2b screens, in this case pivotally attached to mobile members G1 and G2, respectively.

By the above described attachment arrangement, when the two mobile members G1, G2 move linearly according to an approaching displacement, where they approach to each other, mobile member G1 pulls the first 2a and third 2c screens by their corresponding second side edges 2a2, 2c2, and mobile member G2 pulls the second 2b and fourth 2d screens also by their corresponding second side edges 2b2, 2d2. As a consequence of this pulling actions, second side edges 2a2, 2c2 pivot about pivot axis E2, and second side edges 2b2, 2d2 pivot about pivot axis E3. Those pivot axis E2, E3 are, for the illustrated embodiment, orthogonal to linear direction D2, as represented in Figure 4c.

Those pivoting movements make the first 2a and second 2b screens pivot about their hinged first ends 2a1, 2b1, and the third 2c and fourth 2d screens also pivot about their hinged first ends 2c1, 2d1. Specifically, for the illustrated embodiment, the four screens 2a, 2b, 2c, 2d have the same dimensions and at the concealed (Figure 1b) and first use (Figure 2b) positions:
- the first 2a and second 2b screens are pivoted about their hinged first side edges 2a1, 2b1 so that upper edges 2a3, 2b3 thereof are tilted with respect to each other according to a first angle α₁, making the hinged first side edges 2a1, 2b1 protrude in a first protruding direction D3 with respect to a plane including the pivot axes E2, E3; and
- the third 2c and fourth 2d screens are pivoted about their hinged first side edges 2c1, 2d1 so that upper edges 2c3, 2d3 thereof are tilted with respect to each other also according to the first angle α₁, making the hinged first side edges 2c1, 2d1 protrude in a second protruding direction D4, opposite to the first protruding direction D3, with respect to the plane including pivot axes E2, E3.

First angle α₁ is a high angle (of about 165 -175 °), high enough so that the screens 2a, 2b, 2c, 2d can pass through a relatively narrow through opening O1, while going from the concealed position to the first use position, and vice versa, but no so high to impede the above described pivoting actions to make further protrude hinged first side edges 2a1, 2b1 and 2c1, 2d1 according to protruding directions D3 and D4, respectively, i.e. to go to the second use position.

As shown in Figure 4d, when the assembly is at the second use position:
- the first 2a and second 2b screens are pivoted about their hinged first side edges 2a1, 2b1 so that upper edges 2a3, 2b3 thereof (and the whole screens) are tilted with respect to each other according to a second angle α₂ greater than the first angle α₁, making the hinged first side edges 2a1, 2b1 also protrude in the first protruding direction D3 with respect to the plane including the pivot axes E2, E3; and
- the third 2c and fourth 2d screens are pivoted about their hinged first side edges 2c1, 2d1 so that upper edges 2c3, 2d3 thereof (and the whole screens) are tilted with respect to each other also according to that second angle α₂, making the hinged first side edges 2c1, 2d1 also protrude in the second protruding direction D4 with respect to the plane including the pivot axes E2, E3.

For the embodiment shown in Figure 4d, the second angle α₂ is of 90°, so that the four screens 2a, 2b, 2c, 2d adopt, when seen according to Figure 4d, a rhombus-square form.

The assembly of the present invention comprises member driving means Md kinematically linked to the two mobile members G1, G2 to make them move according to the above mentioned linear movement, to displace the screens 2a, 2b, 2c, 2d between the first and second use positions The member driving means Md are configured and arranged to immobilize the first 2a, second 2b, third 2c, and fourth 2d screens at the first and second use positions, and also at a plurality of intermediate use positions at which the upper edges 2a3, 2b3 of the first 2a and second 2b screens are tilted with respect to each other according to respective intermediate angles greater than the first angle α₁ but less than the second angle α₂, and the upper edges 2c3, 2d3 of the third 2c and fourth 2b screens are also tilted with respect to each other according to the respective intermediate angles.

For the embodiment illustrated in Figures, particularly in Figures 7 and 8, the member driving means Md comprise a motor Md1, with its output shaft kinematically connected to a gear arrangement Md2, which includes two pulleys, to transfer its rotational movement to two belts Md3, which are connected to guide members G1, G2 (connection not shown) to make them move linearly through rails V1, V2 (see Figure 6).

The components of the member driving means Md are mounted on a plate Sp of the support structure S, most of them under that plate Sp, with the exception of part of the belts Mds which go through a tubular part Rd3 traversing that plate Sp to reach the guide members G1, G2.

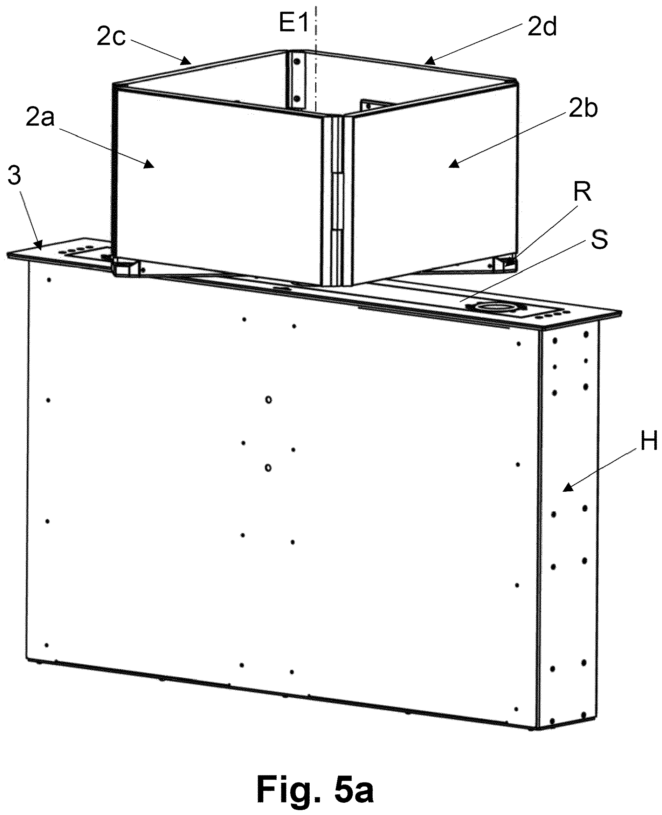

The assembly of the present invention also comprises the above mentioned rotating support structure R supporting the four screens 2a, 2b, 2c, 2d and the mobile members G1, G2. The rotating support structure R is rotatably fixed to the mobile support structure S to rotate about a rotating axis E1 (see Figure 5a), to rotate the four screens 2a, 2b, 2c, 2d from the second use position to a third use position.

For the embodiment of Figure 5a, 5b, 5c, the rotating support structure R and first 2a, second 2b, third 2c, and fourth 2d screens are rotated as a whole 45° about rotating axis E1 (parallel to direction D1, and located at the geometrical centre of the space delimited by the four screens) with respect to their position at the second use position, but maintaining the screens 2a, 2b, 2c, 2d with their upper edges 2a3, 2b3, 2c3, 2d3 tilted as in the second use position. In other words, when at the third use position, for the embodiment shown in Figures 5a, 5b, 5c, the four screens 2a, 2b, 2c, 2d adopt, when seen according to Figure 5c, a square form.

The assembly further comprises rotation driving means Rd kinematically linked to the rotating support structure R to rotate the same about the rotating axis E1, which, for the embodiment depicted in Figure 9 comprises a gearmotor Rd1 kinematically linked to the rotating support structure R by means of a closed belt Rd2 connecting two pulleys, one of which is connected to tubular part Rd3 through an axial bearing so that which rotational movement provide by the motor makes rotate tubular part Rd3, plate Sp and the whole support structure S, with the four screens 2a, 2b, 2c, 2d supported thereon.

Figures 6 shows four hinged two-segment arms P comprised y the assembly of the present invention for the illustrated embodiment, each to be connected to the back of a respective screen 2a, 2b, 2c, 2d (see Figures 4d and 5c), which are used to gather and guide connection cables from the screens to electric and electronic equipment placed within the housing H or at a remote location, protecting those cables when the screens are displaced for all the above described displacements. Instead of those arms P, other alternative guide elements (not shown) could be used, such as flexible tubes.

The assembly of the present invention further comprises a cover for covering the through opening O1. In Figure 1b, for clarity sake, that cover has not been illustrated, to allow shown the components of the assembly placed below.

As shown in Figures 11a, 11b, 11c, 11d, for the illustrated embodiment, that cover comprises two cover plates T1, T2, with together cover the elongated through opening O1.

Each cover T1, T2 has a first edge T1a, T2a (see Figure 11d) hinged to a contour edge O1a of the through opening O1, as shown in Figure 11a, and a to a second edge T1b, T2b, or region adjacent thereto, opposite to the first edge T1a, T2a, which is kinematically linked to cover driving means Cd.

An embodiment of those cover driving means Cd is shown in Figures 11b, 11c, 11d, for which those cover driving means Cd comprise a motor Cd1 (sees Figure 11b) kinematically linked to a gear arrangement Cd2 including two pairs of pulleys which displace two respective close belts Cd3, which linearly move a respective arm segment Cd4, fixed to the belt Cd3, which is hinged to an end part Cd5 attached to the respective cover plate T1, T2.

Alternatively, only one cover plate could be used, instead of the two illustrated cover plates T1, T2, to cover the whole through opening O1.

AS described in a previous section, the assembly further comprises a control system CS (see Figure 4b) configured and arranged to automatically control all the above described driving means (Sd, Rd, Md, and Cd), according to any desired operation mode.

A person skilled in the art could introduce changes and modifications in the embodiments described without departing from the scope of the invention as it is defined in the attached claims. For example, each of the above described driving means could be substituted by any known or considered equivalent by the skilled person (such as, instead of rotary motors, linear motors and associated linear kinematic links).

## Claims

1. A concealable apparatus assembly, comprising:
- a support structure (H) configured to be arranged under a hidden face of a board (1), or panel, in a region adjacent to the contour of a through opening (O1) thereof; and
- at least one apparatus (2a, 2b, 2c, 2d) and a mobile support structure (S) supporting the at least one apparatus (2a, 2b, 2c, 2d), wherein said mobile support structure (S) is fixed in a guided manner to said support structure (H) to move linearly, together with the at least one apparatus (2a, 2b, 2c, 2d), between a concealed position at which when the support structure (H) is arranged under said hidden face of said board (1), or panel, the at least one apparatus (2a, 2b, 2c, 2d) does not protrude through said through opening (O1), and a use position at which the at least one apparatus (2a, 2b, 2c, 2d) protrudes above the board (1), or panel, through the through opening (O1), and vice versa;
**characterized in that:**
- the at least one apparatus (2a, 2b, 2c, 2d) are at least two apparatuses (2a, 2b, 2c, 2d); and
- the assembly further comprises at least one mobile member (G1, G2) attached to said at least two apparatuses (2a, 2b, 2c, 2d), wherein said at least one mobile member (G1, G2) is configured to move with respect to said mobile support structure (S), to displace the at least two apparatuses (2a, 2b, 2c, 2d) from said use position, which is a first use position, to a second use position at which the at least two apparatuses (2a, 2b, 2c, 2d) also protrude above the board (1), or panel, but with orientations which are different to each other and also different to the orientations they adopt in the first use position.

2. The assembly according to claim 1, wherein the at least one mobile member (G1, G2) is configured to move with respect to the mobile support structure (S), to displace the at least two apparatuses (2a, 2b, 2c, 2d) from said first use position to said second use position simultaneously.

3. The assembly according to claim 1 or 2, further comprising a rotating support structure (R) supporting the at least two apparatuses (2a, 2b, 2c, 2d) and said at least one mobile member (G1, G2), wherein said rotating support structure (R) is rotatably fixed to the mobile support structure (S) to rotate about a rotating axis (E1), to displace the at least two apparatuses (2a, 2b, 2c, 2d) from said second use position to a third use position at which the at least two apparatuses (2a, 2b, 2c, 2d) also protrude above the board (1), or panel, but with orientations which are different to each other, and also different to the orientations they adopt in the first and in the second use positions.

4. The assembly according to claim 3, wherein said rotating axis (E1) runs parallel to a direction (D1) along which the support structure (H) is displaced from the concealed position to the first use position.

5. The assembly according to claim 3 or 4, wherein the at least one mobile member (G1, G2) is fixed in a guided manner to said rotating support structure (R) to move linearly according to a linear direction (D2), which is orthogonal to a direction (D1) along which the support structure (H) is displaced from the concealed position to the first use position.

6. The assembly according to any of the previous claims, wherein the at least two apparatuses (2a, 2b, 2c, 2d) comprise at least a first (2a) and a second (2b) screens, and wherein said through opening (O1) is elongated.

7. The assembly according to claim 6 when depending on claim 3 or 4 when they depend on claim 2, wherein said first (2a) and second (2b) screens are hinged to each other at respective first side edges (2a1, 2b1), and wherein a second side edge (2a2, 2b2) of at least one of the first (2a) and second (2b) screens is pivotally attached to said at least one mobile member (G1, G2), so that when the at least one mobile member (G1, G2) moves linearly it pulls said at least one of the first (2a) and second (2b) screens by its second side edge (2a2, 2b2), while said second side edge (2a2, 2b2) also pivots about a pivot axis (E2) orthogonal to said linear direction (D2), which makes both of the at least first (2a) and second (2b) screens pivot about their hinged first ends (2a1, 2b1).

8. The assembly according to claim 7, wherein the at least one mobile member (G1, G2) are two mobile members (G1, G2) configured to simultaneously move lineally along said linear direction (D2), in an approaching/distancing displacement, wherein a second side edge (2a2) of the first screen (2a) is pivotally attached to one (G1) of the two mobile members (G1, G2), and a second side edge (2b2) of the second screen (2b) is pivotally attached to the other (G2) of the two mobile members (G1, G2), so that when the two mobile members (G1, G2) move linearly according to an approaching displacement, where they approach to each other, each pulls a respective one of the first (2a) and second (2b) screens by its corresponding second side edge (2a2, 2b2), while each second side edge (2a2, 2b2) also pivots about a respective pivot axis (E2, E3) orthogonal to said linear direction (D2), which makes both of the first (2a) and second (2b) screens pivot about their hinged first ends (2a1, 2b1).

9. The assembly according to any of claims 6 to 8, wherein the at least two apparatuses (2a, 2b, 2c, 2d) further comprise a third (2c) and a fourth (2d) screens.

10. The assembly according to claim 9, wherein said third (2c) and fourth (2d) screens are hinged to each other at respective first side edges (2c1, 2d1), and wherein second side edges (2c2, 2d2) of the third (2c) and fourth (2d) screens are respectively hinged to said second side edges (2a2, 2b2) of the first (2a) and second (2b) screens.

11. The assembly according to claim 10 when depending on claim 8, wherein at said concealed and first use positions:
- the first (2a) and second (2b) screens are pivoted about their hinged first side edges (2a1, 2b1) so that upper edges (2a3, 2b3) thereof are tilted with respect to each other according to a first angle (α₁), making said hinged first side edges (2a1, 2b1) protrude in a first protruding direction (D3) with respect to a plane including said pivot axes (E2, E3); and
- the third (2c) and fourth (2d) screens are pivoted about their hinged first side edges (2c1, 2d1) so that upper edges (2c3, 2d3) thereof are tilted with respect to each other also according to said first angle (α₁), making said hinged first side edges (2c1, 2d1) protrude in a second protruding direction (D4), opposite to said first protruding direction (D3), with respect to said plane including said pivot axes (E2, E3).

12. The assembly according to claim 11, wherein at said second use position:
- the first (2a) and second (2b) screens are pivoted about their hinged first side edges (2a1, 2b1) so that upper edges (2a3, 2b3) thereof are tilted with respect to each other according to a second angle (α₂) greater than the first angle (α₁), making said hinged first side edges (2a1, 2b1) also protrude in said first protruding direction (D3) with respect to the plane including the pivot axes (E2, E3); and
- the third (2c) and fourth (2d) screens are pivoted about their hinged first side edges (2c1, 2d1) so that upper edges (2c3, 2d3) thereof are tilted with respect to each other also according to said second angle (α₂), making said hinged first side edges (2c1, 2d1) also protrude in said second protruding direction (D4) with respect to the plane including the pivot axes (E2, E3).

13. The assembly according to claim 12 when depending on claim 4, wherein said second angle (α₂) is of 90°, and wherein the assembly further comprises rotation driving means (Rd) kinematically linked to the rotating support structure (R) to rotate the same about said rotating axis (E1), so that when at said third use position the rotating support structure (R) and the first (2a), second (2b), third (2c), and fourth (2d) screens are rotated as a whole 45° about said rotating axis (E1) with respect to their position at the second use position, but maintaining the screens (2a, 2b, 2c, 2d) with their upper edges (2a3, 2b3, 2c3, 2d3) tilted as in the second use position.

14. The assembly according to claim 12 or 13, comprising member driving means (Md) kinematically linked to the two mobile members (G1, G2) to make them move to displace the first (2a), second (2b), third (2c), and fourth (2d) screens between the first and second use positions, wherein said member driving means (Md) are configured and arranged to immobilize the first (2a), second (2b), third (2c), and fourth (2d) screens at the first and second use positions, and also at a plurality of intermediate use positions at which the upper edges (2a3, 2b3) of the first (2a) and second (2b) screens are tilted with respect to each other according to respective intermediate angles greater than the first angle (α₁) but less than the second angle (α₂), and the upper edges (2c3, 2d3) of the third (2c) and fourth (2b) screens are also tilted with respect to each other according to said respective intermediate angles (αᵢ).

15. The assembly according to any of the previous claims, further comprising a cover for covering said through opening (O1), said cover comprising and least a cover plate (T1) with a first edge (T1a) hinged to a contour edge (O1a) of the through opening (O1), and cover driving means (Cd) kinematically linked to a second edge (T1b), or region adjacent thereto, of said cover plate (T1), opposite to said first edge (T1a), to rotate the cover plate (T1) about its hinged first edge (T1a) towards the supporting structure (H) through the through opening (O1).
